Europäisches Patentamt

European Patent Office

Office européen des brevets

(11) Publication number: **0 604 771 A1**

## EUROPEAN PATENT APPLICATION

(21) Application number: **93119157.1**

(22) Date of filing: **27.11.93**

(51) Int. Cl.⁵: **G06F 7/50**

(30) Priority: **31.12.92 ES 9202669**

(43) Date of publication of application:
**06.07.94 Bulletin 94/27**

(84) Designated Contracting States:
**BE DE FR GB IT NL SE**

(71) Applicant: **ALCATEL STANDARD ELECTRICA, S.A.**
**Ramirez de Prado, 5/6**
**E-28045 Madrid(ES)**

(72) Inventor: **Fernandez Duran, Alfonso**
**C/ Castillo de Javier 3**
**E-28692 Villanueva de la Canada (Madrid)(ES)**
Inventor: **Perez Abadia, Mariano**
**C/ Tarragona 25, 4. Izq.**
**E-28045 Madrid(ES)**
Inventor: **Gonzalez Ahijado, Angel**
**C/ Polonia 6, 2. D**
**E-28916 Leganes (Madrid)(ES)**

(74) Representative: **Pohl, Herbert, Dipl.-Ing et al**
**Alcatel SEL AG**
**Patent- und Lizenzwesen**
**Postfach 30 09 29**
**D-70449 Stuttgart (DE)**

(54) **Method and device to reduce the number of data words in binary arithmetic operations.**

(57) In which there is first an input reordering (2) of the m incoming words (1) each of p bits, grouping together all the bits with the same weight; afterwards a logical combination (3) is done, for each group, of the m bits of which they are composed, in this way reducing their number to n; and finally an output reordering (4) is done of the bits obtained from the previous combining process, to form n words (5) consisting of p + n-1 bits of different weights.

The device implements the method described.

Particularly applicable to digital communications systems and in data processing applications.

Fig. 1

Rank Xerox (UK) Business Services
(3. 10/3.0 9/3.3.4)

EP 0 604 771 A1

**OBJECT OF THE INVENTION**

This invention, as indicated in the title, refers to a method to reduce the number of binary data words in order to perform the addition of these words, such that the overall complexity is less due to the reduction in the number of sums to be made.

**BACKGROUND TO THE INVENTION**

The adding process in binary arithmetic using digital logical gates is well known, as can be seen in the book "Circuitos Electrónicos Digitales II", published by the Polytechnical University of Madrid, ETSIT, Department of Electronics, 1983, page 125.

The basic configuration for adding two binary data words, of n bits each, comprises n full one-bit adders, each producing one output bit and one carry bit to be added to the next incoming bits of greater weight. In this basic configuration (series), the total delay is n times the delay produced in one full one-bit adder. This increase of delay makes this configuration unsuitable to be used in high-speed systems when the number of bits n is not small.

To decrease the computation time to obtain the result of an addition, a combinational block can be designed whose inputs are the two binary data words to be added, and whose outputs are the result of this arithmetic operation (parallel configuration).

The complexity of this method is not especially great for a few bits, but it grows rapidly with the number of bits, such that a compromise has to be reached between the speed and the complexity by means of mixed procedures that group together the incoming bits into smaller groups. These smaller groups make use of parallel combinational blocks in order to obtain the output sum and carry that is applied to the carry input of the next block of higher weight (series connection). In this way the delay, that depends on the grouping selected, can be typically reduced by a factor of three or four with respect to the basic configuration.

When the number of words to be added is greater than two, both the delay and the complexity are increased because the total sum is made by means of partial sums of two words, such that m-1 adders are needed to perform the m words addition.

As a result the delay produced in performing an addition in which there are a lot of incoming words may exceed the maximum delay permitted in systems that have to work at high speed.

In this situation it may not be acceptable to reduce the delay in exchange for a greater increase in complexity, because of problems of cost and an excessive power consumption at high frequencies.

There is also the possibility of using cascaded structures which can operate at very high frequencies, but their overall delay (which depends on the number of bits per word and on the number of words to be added) can be very large and unsuitable for some applications.

**TECHNICAL PROBLEM TO BE OVERCAME**

Thus, the technical problem to be overcame is to reduce the delay in the process of adding many binary data words so that it can be used in high speed digital systems without incurring an excessive penalty in power consumption and complexity.

**CHARACTERISATION OF THE INVENTION**

This invention is intended to overcome the problem stated above and provides a method and a device to perform the reduction in the number of data words in binary arithmetic adding operations, in such a way that the delay and the complexity (and consequently the power consumption at high frequencies) are also reduced considerably.

This method is based, first of all, on carrying out a reordering at the input where the bits of the m incoming words with the same weight are grouped into p groups, where p is the number of bits per incoming word. The m bits of each group are then combined in respective combinational means that carry out the addition of these bits, thereby obtaining a number n of output bits less than at the input, in accordance with the expression $m \leq 2^n - 1$. The final weight of each bit is given by the sum of the weight of the bit in question at the output of the combinational means to perform the sum of the bits of the group to which it belongs, plus the actual weight of the incoming bits for this group.

Finally a reordering of all the output bits of the preceding combinational means is done such that n new words are created of $p + n-1$ bits, each one consisting of bits of different weights.

2

In this way a reduction is achieved in the number of words for the performance of binary arithmetic operations and whose sum is the same as that of the initial words.

## BRIEF FOOTNOTES TO THE FIGURES

A more detailed explanation of the invention can be found in the following description of the invention based in the accompanying figures, in which:
- figure 1 shows the steps followed in the performance of the method in accordance with the invention,
- figure 2 shows a general device to reduce the number of words from m to n, where $2^n\text{-}1 \geqq m \geqq 2^{n-1}$,
- figure 3 shows a block diagram of the device of the figure 2, and
- figure 4 shows an application of a device of the type described in figure 2 for performing an accumulation operation.

## DESCRIPTION OF THE INVENTION

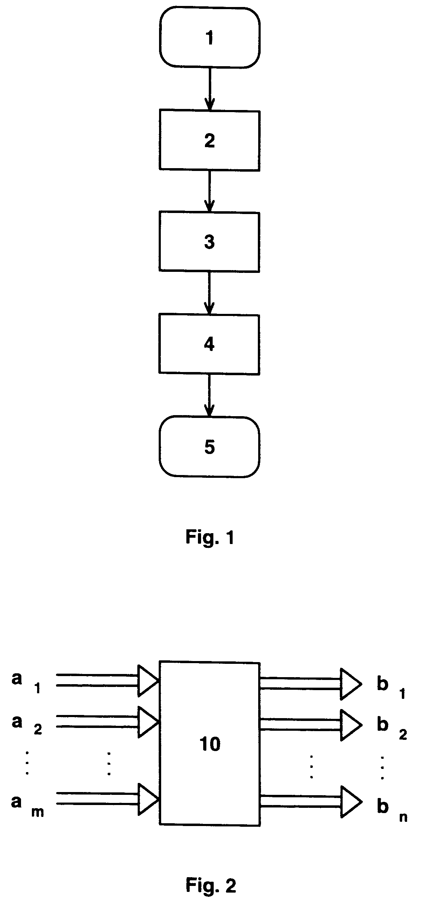

The flowchart shown in figure 1 shows the steps that comprise the method in accordance with this invention, whereby starting from m incoming words 1 of p bits, an input reordering 2 is done in order to group the m bits with the same weight into p different groups.

Subsequently a stage of combination 3 is done, by means of logical functions, for each of the previous p groups, consisting of adding the m incoming bits that compose each group, in order to reduce the number of output bits per group to n, and whose respective weights depend on the weight of the group to which it belongs and on the weight that each bit has within the group in question.

Finally an output reordering 4 of the bits in the p groups with n bits obtained in the stage combination 3 is done, such that a number n of output words 5 is obtained that is less than the initial value and that are composed by p+n-1 bits each of different weight, satisfying the condition that the sum of the n output words 5 is equal to the sum of the m incoming words.

In figure 2 it can be seen the configuration of a device that implements the previous method, which performs a reduction in the number of incoming words m, and consequently also reduces the number of high-speed adders necessary to perform the total addition.

In this figure 2, it can be seen that the m incoming words a1, a2, ..., am are applied to a number of reducing combinational means 10 that produce at their output a smaller number n of output words b1, b2,..., bn with p+n-1 bits each, and where the numbers m and n satisfy the inequality $2^n\text{-}1 \geqq m \geqq 2^{n-1}$.

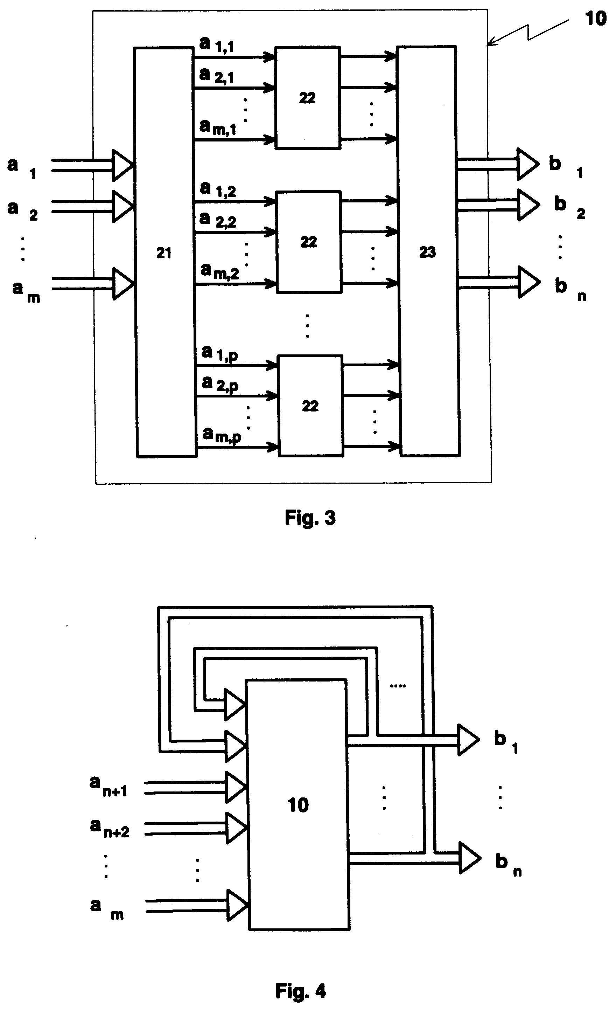

The constitution of these reducing combinational means 10 is detailed in figure 3, in which there appears a first reorganiser 21 that regroups all the bits of the m words, each one of p bits, into p groups of m bits each, each group being composed by all the bits with the same weight of the m incoming words a1i, a2i,..., ami.

Afterwards the m bits of each of the p groups are combined in p combinational circuits 22 in order to obtain n bits from the result of the addition for each group, the total weight of each bit being that which corresponds to it within its group plus that of the incoming bits of this group.

Finally there is a second reorganiser 23 that again regroups all the output bits of the previous p combinational circuits 22 in order to generate n new output words b1, b2,..., bn each one consisting of p+n-1 bits, and in which each one of them is composed by bits of different weight.

It can be proved that the sum of these n output words is equal to that of the m incoming words, but with fewer adders, thereby reducing the delay and the complexity, and, consequently, the power consumption.

Considering the operation of devices of this type, it can be seen from the following table the relationship between the number of incoming words, output words and bits per output word when the number of bits per incoming word is 8.

| Number of input words | Number of output words | Number of output word bits |
|:---:|:---:|:---:|
| 3 | 2 | 9 |
| 4-7 | 3 | 10 |
| 8-15 | 4 | 11 |
| 16-31 | 5 | 12 |
| 32-63 | 6 | 13 |
| 64-127 | 7 | 14 |

3

Because of the equivalence of the sum with this kind of device, it is also possible to arrange them in cascade in order to obtain consecutive reductions in the initial number of words.

It can be seen that, for example, with two reductions it is possible to pass from 7 words to 2, and with three reductions from 127 words to 2.

Finally, when the number of words has been reduced to 2 by means of successive reductions, a conventional adder can be connected in order to obtain the sum of these last two words, this being equivalent, as has already been stated, to that of the initial m words.

The sum of multiple binary data words obtained in this manner requires much less complexity than with standard practice and, for this reason, it is cheaper to implement and its operation is possible at high frequencies with a much lower power comsumption.

Another important application of these devices is for building high speed accumulators as is shown in figure 4, when it is not possible to use conventional structures with large delay times.

In this way the accumulation process is made independent of the final sum by means of using output word feedback with a device of this type and a storage register (not shown).

**Claims**

1. **METHOD TO REDUCE THE NUMBER OF DATA WORDS IN BINARY ARITHMETIC OPERATIONS** <u>characterised</u> in that it comprises the following stages:
   - input reordering (2) of the m incoming words (1) of p bits, that groups together the m bits with the same weight thereby forming p different groups,
   - stage of combination (3), by means of logical functions for each one of the previous p groups, consisting of adding the m incoming bits that form each group, in order to reduce to n the number of output bits per group, and whose respective weights depend on the weight of the group to which they belong and on the weight that each bit has within the group in question, and
   - output reordering (4) of the bits in the p groups of n bits obtained in the stage of combination (3) such that a number n of output words (5) is obtained that is less than the initial number, composed by p + n-1 bits of different weight, the sum of the n output words (5) being equal to that of the m input words (1).

2. **DEVICE TO REDUCE THE NUMBER OF DATA WORDS IN BINARY ARITHMETIC OPERATIONS** <u>characterised</u> in that the m input data words (a1, a2,..., am) of p bits are applied to reducing combinational means (10) in order to obtain a smaller number n of output data words (b1, b2,..., bn) of p + n-1 bits each, the sum of which is the same as that of the m input data words.

3. **DEVICE** in accordance with claim 2, <u>characterised</u> in that the reducing combinational means (10) consist of:
   - a first reorganiser (21) that regroups the m bits with the same weight (a1i, a2i,..., ami) of the m input words into p groups each of m bits,
   - p combinational circuits (22) that receive, respectively, one of the previous p groups of m bits with the same weight (a1i, a2i,..., ami) and that obtain the n bits resulting from the respective m input bits, and with identical weights to that of the bit in question in the corresponding combinational circuit (22) plus the weight of the input bits to this combinational circuit (22), and
   - a second reorganiser (23) that regroups all the output bits of all the combinational circuits (22), generating n words (b1, b2,..., bn) of p + n-1 bits composed by bits of different weights.

EP 0 604 771 A1

Fig. 1

Fig. 2

**Fig. 3**

**Fig. 4**

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | US-A-3 603 776 (WEINBERGER) * column 4, line 30 - column 5, line 23; claims; figures 1-3 * | 1-3 | G06F7/50 |
| X | US-A-3 636 334 (SVOBODA) * column 4, line 1 - column 5, line 10; figure 1 * | 1-3 | |
| X | US-A-4 604 723 (BURROWS) * the whole document * | 1-3 | |
| X | WO-A-86 01017 (KUMARASENA) * page 1, last paragraph; figure 1 * | 1-3 | |

TECHNICAL FIELDS SEARCHED (Int.Cl.5)

G06F

The present search report has been drawn up for all claims

| Place of search | Date of completion of the search | Examiner |
|---|---|---|
| BERLIN | 30 March 1994 | Durand, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)